# EUROPÄISCHE PATENTSCHRIFT

(11) **EP 3 184 371 B1**
(45) Veröffentlichungstag und Bekanntmachung des Hinweises auf die Patenterteilung: **30.01.2019**
(21) Anmeldenummer: 16202407.9
(22) Anmeldetag: 06.12.2016
(51) Int. Cl.: B60R 13/04

(54) **SCHWELLERVERKLEIDUNG**
SILL CLADDING
HABILLAGE DE LONGERON

(30) Priorität: 23.12.2015 DE 202015107057 U
(43) Veröffentlichungstag der Anmeldung: 28.06.2017
(73) Patentinhaber: REHAU AG + Co, 95111 Rehau (DE)
(72) Erfinder: Lux, Stefan, 95182 Döhlau (DE); Mett, Thomas, 95182 Tauperlitz (DE)

(56) Entgegenhaltungen:
- EP-A1- 1 693 252
- EP-A1- 2 525 999
- GB-A- 2 142 594
- US-A1- 2005 093 343
- US-A1- 2006 145 516

## Beschreibung

Die vorliegende Erfindung betrifft eine Schwellerverkleidung für ein Kraftfahrzeug mit einem oberen Bereich und einem unteren Bereich, wobei ein Teil der Außenseite des oberen Bereichs einen Sichtbereich der Schwellerverkleidung bildet, der im Verbauzustand der Schwellerverkleidung am Kraftfahrzeug sichtbar ist, wobei der untere Bereich lösbar an einem Karosserieelement des Kraftfahrzeuges festlegbar ist und sich bis zu einem Übergangsabschnitt erstreckt, wobei der untere Bereich den im Verbauzustand nicht sichtbaren Bereich der Schwellerverkleidung ausbildet.

Eine gattungsgemäße Schwellerverkleidung kann der Patentschrift EP 1 591 319 B1 oder der Patentanmeldung GB 2 142 594 A entnommen werden. Nachteilig an einer Schwellerverkleidung gemäß dem Stand der Technik ist die Tatsache, dass aufgrund der großen Baulänge - in der Regel deutlich über einen Meter - von Schwellerverkleidungen die hiermit verbundene thermische Längenausdehnung durch die Wahl eines mit Füllstoffen verstärkten thermoplastischen Werkstoffes für die Schwellerverkleidung teilweise kompensiert werden muss. Ansonsten kommt es zu einem Ausbeulen der Schwellerverkleidung am Kraftfahrzeug. Für eine noch ausreichende Oberflächenqualität der Schwellerverkleidung kann insbesondere aufgrund der Füllstoffe nur sogenanntes 1A-Material verwendet werden. Die Herstellung der Schwellerverkleidung mit Rücklaufmaterial oder Rezyklat ist aufgrund der sich einstellenden deutlich schlechteren Oberflächenqualität nicht möglich, da insbesondere eine im Sichtbereich aufgebrachte Lackschicht dann zu einem unakzeptablen Erscheinungsbild führt.

Aufgabe der vorliegenden Erfindung ist es daher, eine Schwellerverkleidung anzugeben, die weiterhin eine akzeptable Längenausdehnung und Oberflächenqualität aufweist und gleichzeitig mit einem kostengünstigeren Material herstellbar ist.

Diese Aufgabe wird vorliegend erfüllt durch eine Schwellerverkleidung mit einer Baulänge deutlich über einen Meter, für ein Kraftfahrzeug mit einem oberen Bereich und einem unteren Bereich, wobei ein Teil der Außenseite des oberen Bereichs einen Sichtbereich der Schwellerverkleidung bildet, der im Verbauzustand der Schwellerverkleidung am Kraftfahrzeug sichtbar ist, wobei der untere Bereich lösbar an einem Karosserieelement des Kraftfahrzeuges festlegbar ist und sich bis zu einem Übergangsabschnitt erstreckt, wobei der untere Bereich den im Verbauzustand nicht sichtbaren Bereich der Schwellerverkleidung ausbildet, wobei die Schwellerverkleidung aus wenigstens zwei Teilen ausgebildet ist, wobei ein den oberen Bereich bildendes Sichtteil aus einem thermoplastischen Werkstoff besteht und auf der Außenseite wenigstens eine Lackschicht aufweist und, wobei ein den unteren Bereich bildendes Funktionsteil aus einem weiteren thermoplastischen Werkstoff besteht und unlackiert ist und, wobei das Sichtteil mit dem Funktionsteil im Bereich des Übergangsabschnittes verbunden ist. Erfindungsgemäß erlaubt es die Trennung der Schwellerverkleidung in einen Funktionsteil und in einen Sichtteil die für die beiden Teile verwendeten thermoplastischen Werkstoffe unterschiedlich zu wählen. Der Werkstoff des Funktionsteil muss dann nicht mehr die hohe Oberflächenqualität des Sichtteils aufweisen bzw. gewährleisten können und kann entsprechend eine geringere Qualität und somit einen geringeren Materialpreis aufweisen. Ein weiterer Vorteil besteht darin, dass das Funktionsteil nicht lackiert werden muss und somit entsprechend Lack und Lackierzeit eingespart werden kann.

Das Sichtteil kann mit dem Funktionsteil über wenigstens eine Rastverbindung und/oder wenigstens eine geschweißte Fügezone und/oder wenigstens eine Klebstoffschicht verbunden sein.

Der thermoplastische Werkstoff und/oder der weitere thermoplastische Werkstoff kann/können Füllstoffe umfassen. Insbesondere können der thermoplastische Werkstoff und der weitere thermoplastische Werkstoff Füllstoffe umfassen, wobei der weitere thermoplastische Werkstoff einen höheren Gehalt an Füllstoffen als der thermoplastische Werkstoff aufweist. Der Gehalt an Füllstoffen in dem weiteren thermoplastischen Werkstoff des Funktionsteils kann hierdurch gegenüber dem Gehalt an Füllstoffen in einem Material einer Schwellerverkleidung des Standes der Technik weiter erhöht, und somit die thermische Längenausdehnung weiter verringert werden, da hiermit einhergehende Beeinträchtigungen der Oberflächenqualität für das Funktionsteil unerheblich sind, da dieses insbesondere unlackiert ist.

Die Füllstoffe können Kreide, Sand, Kieselgur, Glasfasern, Kohlefasern, Flachsfasern, Jutefasern, Borfasern, Aramidfasern, Glaskugeln, Zinkoxid, Quarz, Holzmehl, Stärke, Graphit, Ruß und/oder Talkum oder Kombinationen der vorgenannten Füllstoffe umfassen. Besonders bevorzugt umfassen die Füllstoffe des thermoplastischen Werkstoffes und/oder des weiteren thermoplastischen Werkstoffes Talkum und/oder Glasfasern. Der Gehalt des Füllstoffes des thermoplastischen Werkstoffes und/oder des weiteren thermoplastischen Werkstoffes kann zwischen 15 wt.% bis 40 wt.%, bevorzugt zwischen 20 wt.% bis 30 wt.% betragen (wt.% entspricht Gewichtsprozent).

Der thermoplastische Werkstoff und/oder der weitere thermoplastische Werkstoff kann/können ein Polyolefin und/oder ein thermoplastisches Elastomere (kurz TPE), insbesondere ein thermoplastisches Elastomere auf Olefinbasis (kurz TPE-O oder TPE-V) umfassen. Besonders bevorzugt umfasst der thermoplastische Werkstoff und/oder der weitere thermoplastische Werkstoff einen Blend aus Polypropylen/Ethylen-Propylen-DienKautschuk (kurz PP/EPDM).

Das Funktionsteil kann aus einem geschäumten thermoplastischen Werkstoff bestehen. Aufgrund dessen, dass die Oberflächenqualität der Schwellerverkleidung durch den thermoplastischen Werkstoff des Sichtteils definiert ist, kann der weitere thermoplastische Werkstoff des Funktionsteils sogar aus einem, vorzugsweise chemisch und/oder physikalisch, geschäumten thermoplastischen Werkstoff bestehen. Hierdurch lässt sich zusätzlich zu den bereits beschriebenen Vorteilen das Gewicht der Schwellerverkleidung reduzieren und weiter Kosten für den weiteren thermoplastischen Werkstoff einsparen.

Der weitere thermoplastische Werkstoff des Funktionsteils kann Rücklaufmaterial und/oder ein Rezyklat umfassen. Üblicherweise weisen Rücklaufmaterial oder Rezyklat eine unzureichende Oberflächenqualität auf, können bei der erfindungsgemäßen Schwellerverkleidung jedoch trotzdem für das Funktionsteil eingesetzt werden, da allein das Sichtteil die Oberflächenqualität definiert.

Die Teile der Schwellerverkleidung können in einem Spritzgußverfahren hergestellt sein.

Teil der Erfindung ist ferner ein Kraftfahrzeug mit einer vorstehend beschriebenen Schwellerverkleidung, oder mit einer Schwellerverkleidung nach einem der Ansprüche 1 bis 9.

Die Erfindung wird anhand der nachfolgenden lediglich Ausführungsbeispiele darstellender Figuren näher erläutert. Gleiche oder funktionsgleiche Elemente sind mit den gleichen Bezugszeichen versehen. Es zeigen:
- Fig. 1: Eine Schwellerverkleidung im Verbauzustand an einem Kraftfahrzeug;
- Fig. 2: eine dreidimensionale Ansicht der Schwellerverkleidung gemäß Fig. 1;
- Fig. 3a-3f: Querschnittsdarstellungen von Varianten einer Schwellerverkleidung gemäß der Schnittlinie III-III aus Fig. 1.

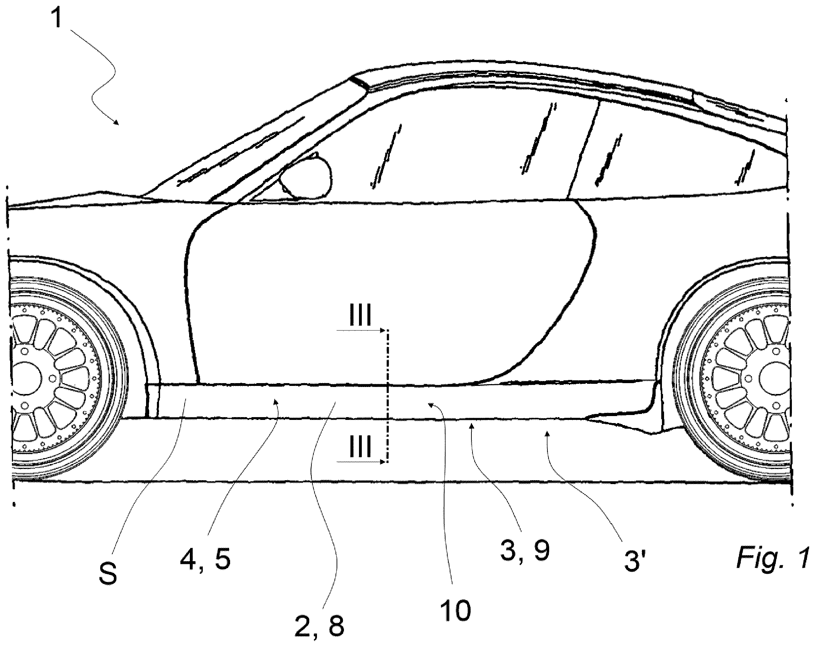

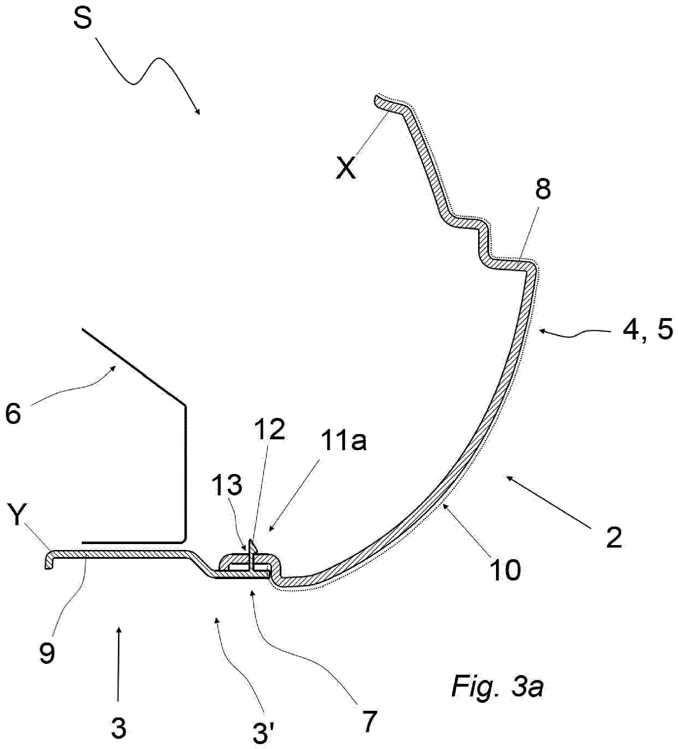

Die Fig. 1 zeigt eine Schwellerverkleidung S im Verbauzustand an einem Kraftfahrzeug 1 mit einem oberen Bereich 2 und einem unteren Bereich 3, wobei ein Teil der Außenseite 4 des oberen Bereichs 2 einen Sichtbereich 5 der Schwellerverkleidung S bildet, der im Verbauzustand der Schwellerverkleidung S am Kraftfahrzeug 1 sichtbar ist, wobei der untere Bereich 3 lösbar an einem Karosserieelement 6 (vgl. Fig. 3a bis Fig. 3f) des Kraftfahrzeuges 1 festlegbar ist und sich bis zu einem Übergangsabschnitt 7 erstreckt, wobei der untere Bereich 3 den im Verbauzustand nicht sichtbaren Bereich 3' der Schwellerverkleidung S ausbildet (daher ist hier nur dessen Lage mit einem Pfeil angedeutet).

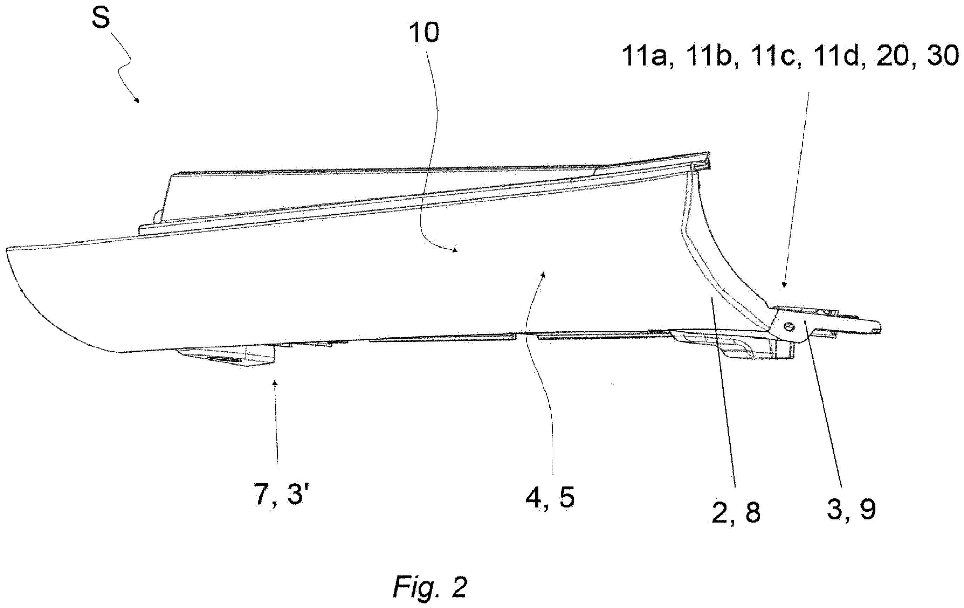

Die Fig. 2 zeigt eine dreidimensionale Ansicht der Schwellerverkleidung S gemäß Fig. 1 für ein Kraftfahrzeug 1 mit einem oberen Bereich 2 und einem unteren Bereich 3, wobei ein Teil der Außenseite 4 des oberen Bereichs 2 einen Sichtbereich 5 der Schwellerverkleidung S bildet, der im Verbauzustand der Schwellerverkleidung S am Kraftfahrzeug 1 sichtbar ist, wobei der untere Bereich 3 lösbar an einem Karosserieelement 6 (vgl. Fig. 3a bis Fig. 3f) des Kraftfahrzeuges 1 festlegbar ist und sich bis zu einem Übergangsabschnitt 7 erstreckt, wobei der untere Bereich 3 den im Verbauzustand nicht sichtbaren Bereich 3' der Schwellerverkleidung S ausbildet. Die Schwellerverkleidung S ist aus wenigstens zwei Teilen 8, 9 ausgebildet, wobei ein den oberen Bereich 2 bildendes Sichtteil 8 aus einem thermoplastischen Werkstoff X besteht und auf der Außenseite 4 wenigstens eine Lackschicht 10 aufweist und, wobei ein den unteren Bereich 3 bildendes Funktionsteil 9 aus einem weiteren thermoplastischen Werkstoff Y besteht und unlackiert ist und, wobei das Sichtteil 8 mit dem Funktionsteil 9 im Bereich des Übergangsabschnittes 7 verbunden ist. Das Sichtteil 8 kann mit dem Funktionsteil 9 über wenigstens eine Rastverbindung 11a, 11b, 11c, 11d und/oder wenigstens eine geschweißte Fügezone 20 und/oder wenigstens eine Klebstoffschicht 30 verbunden sein, die in den folgenden Fig. 3a bis Fig. 3f dargestellt sind.

Die Querschnittsdarstellungen in Fig. 3a bis Fig. 3d gemäß der Schnittlinie III-III aus Fig. 1, zeigen unterschiedliche Ausbildungen der wenigstens einen Rastverbindung 11a, 11b, 11c, 11d die das Sichtteil 8 mit dem Funktionsteil 9 verbinden.

In Fig. 3a steht von dem Übergangsabschnitt 7 des Funktionsteils 9 ein Rasthaken 12 in einem Winkel ab. Der Rasthaken 12 ist in einer einstückig mit dem Sichtteil 8 ausgebildeten Rasthakenaufnahme 13 aufgenommen. Rasthaken 12 und Rasthakenaufnahme 13 bilden hierdurch die Rastverbindung 11a aus.

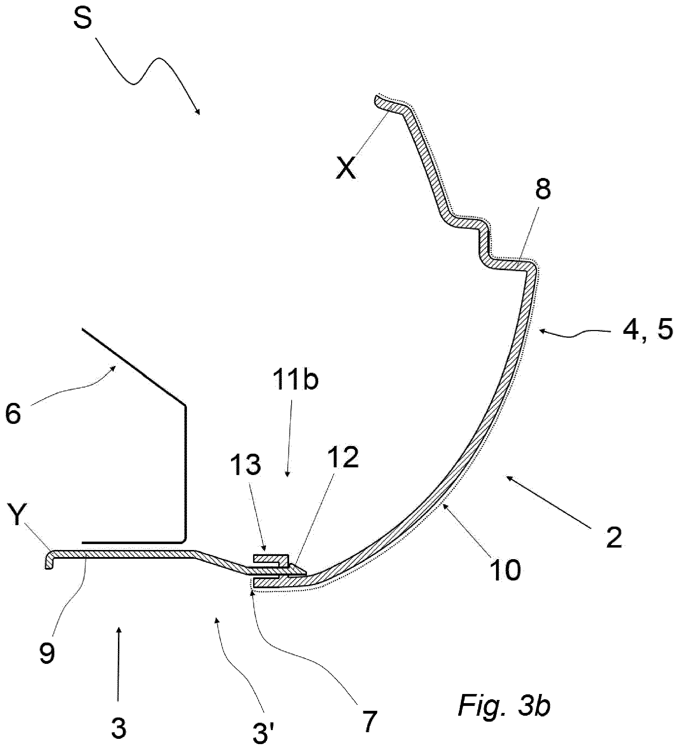

In Fig. 3b weist der Randbereich des flach ausgebildeten Übergangsabschnitts 7 des Funktionsteils 9 einen Rasthaken 12 auf. Der Rasthaken 12 ist in einer einstückig mit dem Sichtteil 8 ausgebildeten Rasthakenaufnahme 13 aufgenommen. Rasthaken 12 und Rasthakenaufnahme 13 bilden hierdurch die Rastverbindung 11b aus.

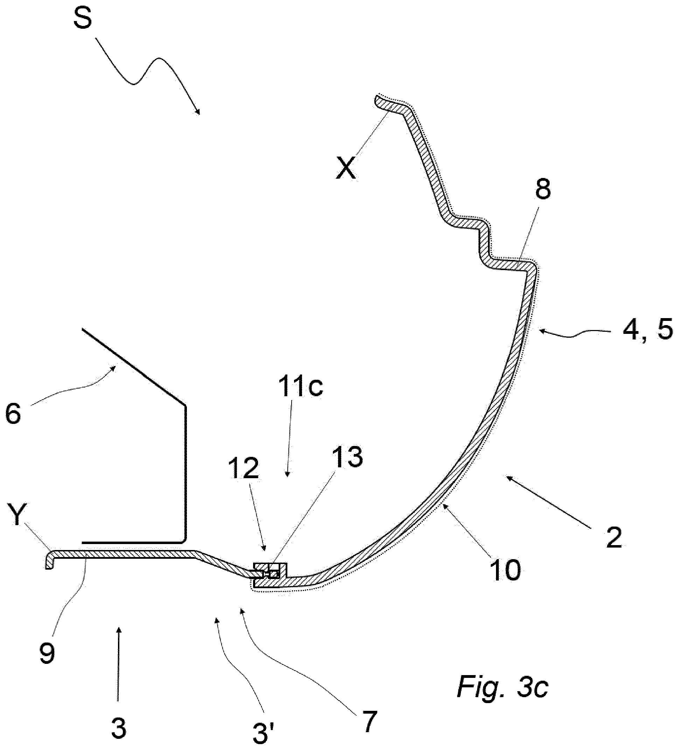

In Fig. 3c weist der Randbereich des flach ausgebildeten Übergangsabschnitts 7 des Funktionsteils 9 eine Rasthakenaufnahme 13 auf. Die Rasthakenaufnahme 13 nimmt einen einstückig mit dem Sichtteil 8 ausgebildeten Rasthaken 12 auf. Rasthaken 12 und Rasthakenaufnahme 13 bilden hierdurch die Rastverbindung 11c aus.

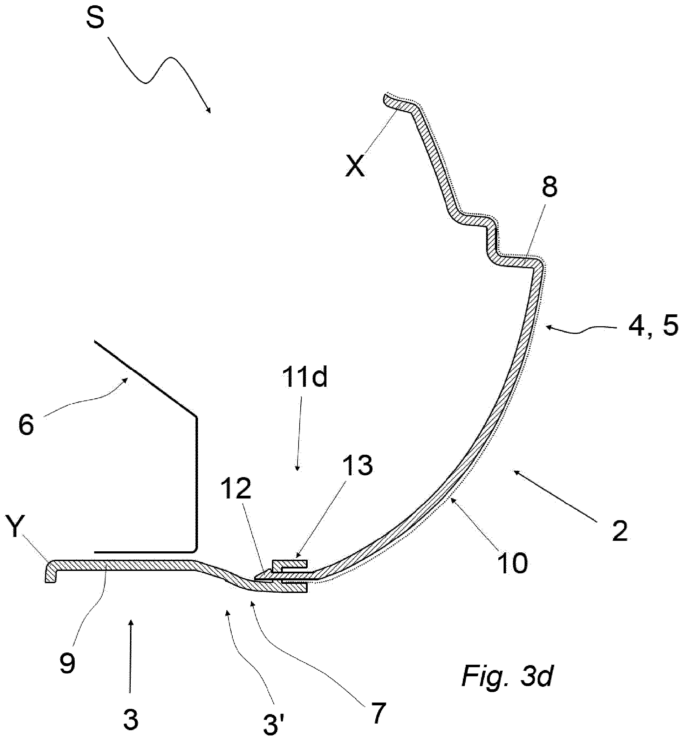

In Fig. 3d weist der Randbereich des flach ausgebildeten Übergangsabschnitts 7 des Funktionsteils 9 eine Variante einer Rasthakenaufnahme 13 auf. Die Rasthakenaufnahme 13 nimmt einen einstückig mit dem Sichtteil 8 ausgebildeten Rasthaken 12 auf. Rasthaken 12 und Rasthakenaufnahme 13 bilden hierdurch die Rastverbindung 11d aus.

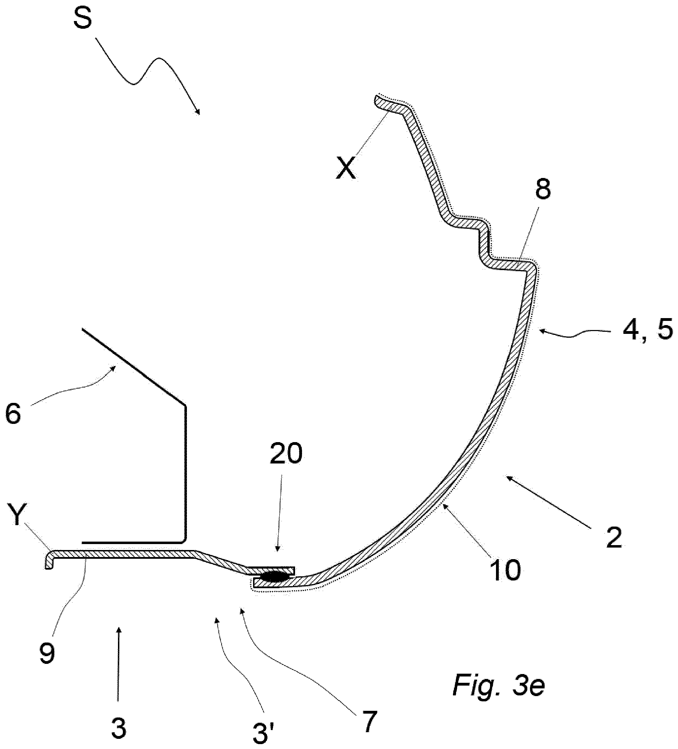

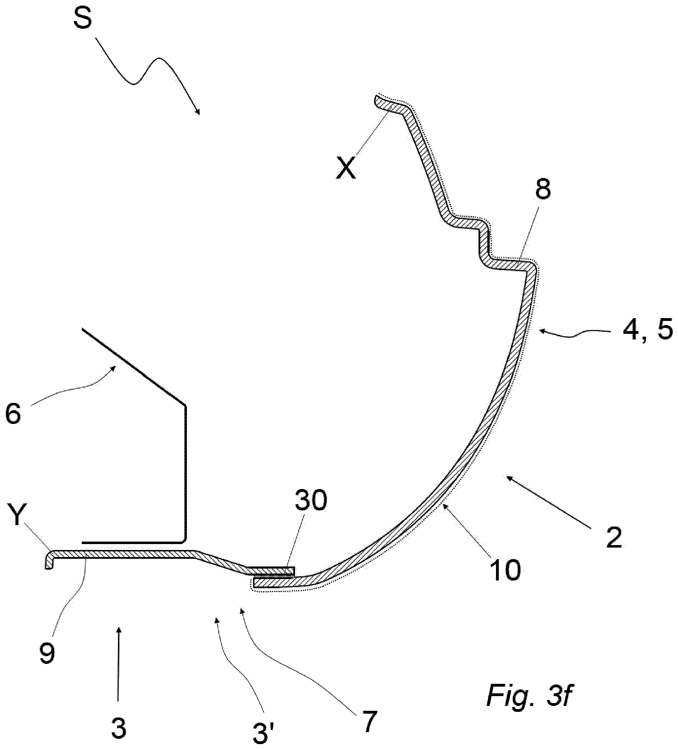

Die Querschnittsdarstellungen in Fig. 3e und Fig. 3f gemäß der Schnittlinie III-III aus Fig. 1, zeigen weitere Ausbildungen der Verbindungszone zwischen Sichtteil 8 und Funktionsteil 9.

In Fig. 3e ist das Sichtteil 8 mit dem Funktionsteil 9 über wenigstens eine geschweißte Fügezone 20 verbunden. Die Fügezone 20 kann insbesondere durch ein Laserschweißverfahren oder ein Ultraschallschweißverfahren ausgebildet sein.

In Fig. 3f ist das Sichtteil 8 mit dem Funktionsteil 9 über wenigstens eine Klebstoffschicht 30 verbunden.

Nachfolgendes gilt generell für alle in den vorstehend beschriebenen Fig. 1 bis Fig. 3f dargestellten Schwellerverkleidungen:
Der thermoplastische Werkstoff X und/oder der weitere thermoplastische Werkstoff Y kann/können Füllstoffe umfassen. Insbesondere können der thermoplastische Werkstoff X und der weitere thermoplastische Werkstoff Y Füllstoffe umfassen, wobei der weitere thermoplastische Werkstoff Y einen höheren Gehalt an Füllstoffen als der thermoplastische Werkstoff X aufweist. Die Füllstoffe können Kreide, Sand, Kieselgur, Glasfasern, Kohlefasern, Flachsfasern, Jutefasern, Borfasern, Aramidfasern, Glaskugeln, Zinkoxid, Quarz, Holzmehl, Stärke, Graphit, Ruß und/oder Talkum oder Kombinationen der vorgenannten Füllstoffe umfassen. Der thermoplastische Werkstoff X und/oder der weitere thermoplastische Werkstoff Y kann/können ein Polyolefin (PP, PE) und/oder ein thermoplastisches Elastomere (TPE), insbesondere ein thermoplastisches Elastomere auf Olefinbasis (TPE-O, TPE-V) umfassen. Besonders bevorzugt umfasst der thermoplastische Werkstoff X und/oder der weitere thermoplastische Werkstoff Y einen Blend aus Polypropylen/Ethylen-Propylen-Dien-Kautschuk (kurz PP/EPDM). Das Funktionsteil 9 kann aus einem geschäumten thermoplastischen Werkstoff Y bestehen. Der thermoplastische Werkstoff Y des Funktionsteils 9 kann Rücklaufmaterial und/oder ein Rezyklat umfassen. Die Teile 8, 9 der Schwellerverkleidung S können in einem Spritzgußverfahren hergestellt sein.

## Patentansprüche

1. Schwellerverkleidung (S) mit einer Baulänge deutlich über einen Meter, für ein Kraftfahrzeug (1) mit
- einem oberen Bereich (2) und
- einem unteren Bereich (3),
wobei ein Teil der Außenseite (4) des oberen Bereichs (2) einen Sichtbereich (5) der Schwellerverkleidung (S) bildet, der im Verbauzustand der Schwellerverkleidung (S) am Kraftfahrzeug (1) sichtbar ist,
wobei der untere Bereich (3) lösbar an einem Karosserieelement (6) des Kraftfahrzeuges (1) festlegbar ist und sich bis zu einem Übergangsabschnitt (7) erstreckt, wobei der untere Bereich (3) den im Verbauzustand nicht sichtbaren Bereich (3') der Schwellerverkleidung (S) ausbildet,
**dadurch gekennzeichnet, dass**
die Schwellerverkleidung (S) aus wenigstens zwei Teilen (8, 9) ausgebildet ist, wobei ein den oberen Bereich (2) bildendes Sichtteil (8) aus einem thermoplastischen Werkstoff (X) besteht und auf der Außenseite (4) wenigstens eine Lackschicht (10) aufweist und,
wobei ein den unteren Bereich (3) bildendes Funktionsteil (9) aus einem weiteren thermoplastischen Werkstoff (Y) besteht und unlackiert ist und,
wobei das Sichtteil (8) mit dem Funktionsteil (9) im Bereich des Übergangsabschnittes (7) verbunden ist.

2. Schwellerverkleidung (S) nach Anspruch 1, **dadurch gekennzeichnet, dass** das Sichtteil (8) mit dem Funktionsteil (9) über wenigstens eine Rastverbindung (11a, 11b, 11c, 11d) und/oder wenigstens eine geschweißte Fügezone (20) und/oder wenigstens eine Klebstoffschicht (30) verbunden ist.

3. Schwellerverkleidung (S) nach einem der vorstehenden Ansprüche, **dadurch gekennzeichnet, dass** das der thermoplastische Werkstoff (X) und/oder der weitere thermoplastische Werkstoff (Y) Füllstoffe umfasst/umfassen.

4. Schwellerverkleidung (S) nach einem der vorstehenden Ansprüche, **dadurch gekennzeichnet, dass** der thermoplastische Werkstoff (X) und der weitere thermoplastische Werkstoff (Y) Füllstoffe umfassen, wobei der weitere thermoplastische Werkstoff (Y) einen höheren Gehalt an Füllstoffen als der thermoplastische Werkstoff (X) aufweist.

5. Schwellerverkleidung (S) nach einem der vorstehenden Ansprüche 3 oder 4, **dadurch gekennzeichnet, dass** die Füllstoffe Kreide, Sand, Kieselgur, Glasfasern, Kohlefasern, Flachsfasern, Jutefasern, Borfasern, Aramidfasern, Glaskugeln, Zinkoxid, Quarz, Holzmehl, Stärke, Graphit, Ruß und/oder Talkum oder Kombinationen der vorgenannten Füllstoffe umfassen.

6. Schwellerverkleidung (S) nach einem der vorstehenden Ansprüche, **dadurch gekennzeichnet, dass** der thermoplastische Werkstoff (X) und/oder der weitere thermoplastische Werkstoff (Y) ein Polyolefin (PP, PE) und/oder ein thermoplastisches Elastomere (TPE), insbesondere ein thermoplastisches Elastomere auf Olefinbasis (TPE-O, TPE-V) umfasst/umfassen.

7. Schwellerverkleidung (S) nach einem der vorstehenden Ansprüche, **dadurch gekennzeichnet, dass** das Funktionsteil (9) aus einem geschäumten thermoplastischen Werkstoff (Y) besteht.

8. Schwellerverkleidung (S) nach einem der vorstehenden Ansprüche, **dadurch gekennzeichnet, dass** der thermoplastische Werkstoff (Y) des Funktionsteils (9) Rücklaufmaterial und/oder ein Rezyklat umfasst.

9. Schwellerverkleidung (S) nach einem der vorstehenden Ansprüche, **dadurch gekennzeichnet, dass** die Teile (8, 9) der Schwellerverkleidung (S) in einem Spritzgußverfahren hergestellt sind.

10. Kraftfahrzeug mit einer Schwellerverkleidung (S) nach einem der vorstehenden Ansprüche.

## Claims

1. Sill trim (S) with a construction length significantly above one meter, for a motor vehicle (1), with
- an upper region (2), and
- a lower region (3),
wherein a part of the outer side (4) of the upper region (2) forms a visible area (5) of the sill trim (5), which, in the installed state of the sill trim (S), is visible on the motor vehicle (1),
wherein the lower region (3) is releasably fastenable to a bodywork element (6) of the motor vehicle (1) and extends until a transition section (7), wherein the lower region (3) forms the region (3') of the sill trim (S) not visible in the installed state,
**characterized in that**
the sill trim (S) is composed of at least two parts (8, 9), wherein
a visible part (8) forming the upper region (2) consists of a thermoplastic material (X) and comprises at least one lacquer layer (10) on the outer side (4), and
wherein a function part (9) forming the lower region (3) consist of a further thermoplastic material (Y) and is unlacquered and,
wherein the visible part (8) is connected with the function part (9) in the region of the transition section (7).

2. Sill trim (S) according to claim 1, **characterized in that** the visible part (8) is connected with the function part (9) via at least one latching connection (11a, 11b, 11c, 11d) and/or at least one welded joining zone (20) and/or at least one adhesive layer (30).

3. Sill trim (S) according to one of the preceding claims, **characterized in that** the thermoplastic material (X) and/or the further thermoplastic material (Y) includes/include filling material(s).

4. Sill trim (S) according to one of preceding claims, **characterized in that** the thermoplastic material (X) and the further thermoplastic material (Y) include filling materials, wherein the further thermoplastic material (Y) has a higher content of filling materials than the thermoplastic material (X).

5. Sill trim (S) according to one of the preceding claims 3 or 4, **characterized in that** the filling material includes chalk, sand, diatomaceous earth, glass fibers, carbon fibers, flax fibers, jute fibers, boron fibers, aramid fibers, glass beads, zinc oxide, quartz, sawdust, starch, graphite, carbon black, and/or talcum, or combinations of the aforementioned filling materials.

6. Sill trim (S) according to one of the preceding claims, **characterized in that** the thermoplastic material (X) and/or the further thermoplastic material (Y) includes/include a polyolefin (PP, PE) and/or a thermoplastic elastomer (TPE), in particular an olefin-based thermoplastic elastomer (TPE-O, TPE-V).

7. Sill trim (S) according to one of the preceding claims, **characterized in that** the function part (9) consists of a foamed thermoplastic material (Y).

8. Sill trim (S) according to one of the preceding claims, **characterized in that** the thermoplastic material (Y) of the function part (9) includes scrap material and/or a recyclate.

9. Sill trim (S) according to one of the preceding claims, **characterized in that** the parts (8, 9) of the sill trim (S) are produced in an injection-molding process.

10. Motor vehicle with a sill trim (S) according to one of the preceding claims.

## Revendications

1. Protection de bas de marche (S) d'une longueur totale sensiblement supérieure à un mètre pour un véhicule automobile (1), comprenant
- une section supérieure (2) et
- une section inférieure (3),
dans laquelle une partie du côté extérieur (4) de la section supérieure (2) forme une zone visible (5) de la protection de bas de marche (S) qui est visible lorsque la protection de bas de marche (S) se trouve dans l'état installé sur le véhicule automobile (1),
dans laquelle la section intérieure (3) peut être fixée de manière amovible sur un élément de la carrosserie (6) du véhicule automobile (1) et s'étend jusqu'à une zone de transition (7), la section intérieure (3) formant la zone non visible (3') de la protection de bas de marche (S) à l'état monté,
**caractérisée en ce que**
la protection de bas de marche (S) est composée d'au moins deux parties (8, 9), dans laquelle
une partie visible (8) qui forme la section supérieure (2) consiste en un un matériau thermoplastique (X) et présente sur le côté extérieur (4) au moins une couche de peinture (10) et,
dans laquelle une partie fonctionnelle (9) qui forme la section inférieure (3) consiste en un matériau thermoplastique complémentaire (Y) et n'est pas peinte, et
la partie visible (8) étant reliée à la partie fonctionnelle (9) dans la région de la zone de transition (7).

2. Protection de bas de marche (S) selon la revendication 1, **caractérisée en ce que** la partie visible (8) est reliée à la partie fonctionnelle (9) par l'intermédiaire d'au moins une liaison par encliquetage (11a, 11b, 11c, 11 d) et/ou d'au moins une zone d'assemblage (20) soudée et/ou d'au moins une couche d'adhésive (30).

3. Protection de bas de marche (S) selon l'une quelconque des revendications précédentes, **caractérisée en ce que** le matériau thermoplastique (X) et/ou le matériau thermoplastique complémentaire (Y) comprend des matières de remplissage.

4. Protection de bas de marche (S) selon l'une quelconque des revendications précédentes, **caractérisée en ce que** le matériau thermoplastique (X) et le matériau thermoplastique complémentaire (Y) présentent des matières de remplissage, le matériau thermoplastique complémentaire (Y) présentant une teneur plus importante en matières de remplissage que le matériau thermoplastique (X).

5. Protection de bas de marche (S) selon l'une quelconque des revendications précédentes 3 ou 4, **caractérisée en ce que** les matières de remplissage contiennent de la craie, du sable, de la terre à diatomées, des fibres de verre, des fibres de carbone, des fibres de lin, des fibres de jute, des fibres de bore, des fibres d'aramide, des billes de verre, de l'oxyde de zinc, du quartz, de la sciure, de l'amidon, du graphite, de la suie et/ou du talc ou des combinaisons des matières de remplissage ci-dessus mentionnées.

6. Protection de bas de marche (S) selon l'une quelconque des revendications précédentes, **caractérisée en ce que** le matériau thermoplastique (X) et/ou le matériau thermoplastique complémentaire (Y) contient/contiennent une polyoléfine (PP, PE) et/ou un élastomère thermoplastique (TPE), notamment un élastomère thermoplastique à base d'oléfine (TPE-O, TPE-V).

7. Protection de bas de marche (S) selon l'une quelconque des revendications précédentes, **caractérisée en ce que** la partie fonctionnelle (9) est composée d'un matériau thermoplastique (Y) moussé.

8. Protection de bas de marche (S) selon l'une quelconque des revendications précédentes, **caractérisée en ce que** le matériau thermoplastique (Y) de la partie fonctionnelle (9) contient du matériau de récupération et/ou une matière recyclable.

9. Protection de bas de marche (S) selon l'une quelconque des revendications précédentes, **caractérisée en ce que** les parties (8, 9) de la protection de bas de marche (S) sont fabriquées selon un procédé de moulage par injection.

10. Véhicule automobile avec une protection de bas de marche (S) selon l'une quelconque des revendications précédentes.
